# DEMANDE DE BREVET EUROPEEN

(11) **EP 1 449 468 A1**
(43) Date de publication de la demande: **25.08.2004**
(21) Numéro de dépôt: 04356009.3
(22) Date de dépôt: 03.02.2004
(51) Int. Cl.: A47J 27/04, A47J 27/212

(54) **Boitier d'appareil electromenager avec reservoir d'eau**

(30) Priorité: 18.02.2003 FR 0302041
(71) Demandeur: SEB S.A., 69130 Ecully (FR)
(72) Inventeur: Dumoux, Philippe, 21120 Gemeaux (FR); Pretre, Nicolas, 21000 Dijon (FR)
(74) Mandataire: Kiehl, Hubert

(57) **Abrégé**

- L'invention concerne un boîtier d'appareil électroménager comportant un réservoir d'eau (3) surmontant un socle (2) contenant un voyant lumineux, une fenêtre (10) transparente ou translucide étant montée dans un passage (9) ménagé dans le socle, ladite fenêtre étant susceptible d'être éclairée par ledit voyant lumineux,
- Conformément à l'invention la fenêtre (10) est solidaire du réservoir d'eau (3).

## Description

La présente invention se rapporte au domaine technique général des appareils électroménagers comportant un réservoir d'eau solidaire d'un boîtier comportant des appareillages électriques. La présente invention concerne notamment, mais non exclusivement, les cuiseurs vapeur.

Il est connu dans les appareils du type précité de réaliser un réservoir d'eau surmontant un socle contenant l'appareillage électrique. De tels appareils peuvent être équipés d'un voyant lumineux de fonctionnement. Le socle contenant l'appareillage électrique étant opaque, une fenêtre transparente ou translucide est rapportée dans une ouverture du socle placée en regard du témoin lumineux. Une telle construction présente l'inconvénient de nécessiter un assemblage.

L'objet de l'invention est de simplifier l'assemblage d'un boîtier d'appareil électroménager du type précité.

Un autre objet de la présente invention est de proposer un boîtier d'appareil électroménager du type précité dont l'utilisation soit facilitée.

Ces objets sont atteints avec un boîtier d'appareil électroménager comportant un réservoir d'eau surmontant un socle contenant un voyant lumineux, une fenêtre transparente ou translucide étant montée dans un passage ménagé dans le socle, ladite fenêtre étant susceptible d'être éclairée par ledit voyant lumineux, du fait que la fenêtre est solidaire du réservoir d'eau. Cette disposition permet de simplifier le montage du boîtier.

Avantageusement le réservoir d'eau est réalisé dans une matière plastique transparente ou translucide. Une telle matière peut être aisément moulée ou injectée.

Avantageusement encore le réservoir d'eau présente un fond sous lequel est monté le voyant lumineux. Le socle peut devenir une simple pièce de protection fermant le compartiment technique de l'appareil, les différentes parties électriques de l'appareil étant montées sous le fond du réservoir.

Avantageusement encore, la fenêtre est formée par une languette issue du réservoir d'eau, ladite languette étant prolongée sur une paroi latérale dudit réservoir d'eau par une facette formant un niveau d'eau. Cette disposition permet de réaliser un niveau d'eau au dessus de la fenêtre éclairée par le voyant lumineux.

Selon une forme de réalisation, la facette est raccordée à la languette par une paroi transparente et/ou translucide disposée au dessus du voyant lumineux.

Avantageusement alors, la languette comporte une face interne présentant des rainures. Cette disposition permet d'obtenir une plus grande surface éclairée par le voyant lumineux. Cette disposition permet de former de manière bien marquée le témoin de fonctionnement lumineux.

Avantageusement encore, la facette présente une face externe et une face interne présentant un état de surface poli. Un tel état de surface peut notamment être obtenu grâce au polissage des surfaces correspondantes du moule utilisé pour la réalisation de la pièce formant le réservoir d'eau. Cette disposition permet de faciliter la lecture du niveau d'eau.

Avantageusement encore, deux nervures ascendantes délimitent latéralement la facette sur la face interne de la paroi latérale. Cette disposition permet de faciliter l'éclairage du niveau d'eau grâce à la réflexion de la lumière.

Avantageusement alors, les deux nervures ascendantes présentent une épaisseur décroissante de leur base à leur sommet jusqu'à rejoindre la paroi latérale. Cette disposition permet de faciliter encore davantage l'éclairage du niveau d'eau.

Selon une construction avantageuse, le réservoir d'eau comporte un dispositif de remplissage. En alternative, le dispositif de remplissage peut notamment être agencé dans un bac récupérateur de jus disposé sur le réservoir d'eau.

L'utilisation d'un niveau d'eau est particulièrement souhaitable lorsque l'utilisateur peut remplir le réservoir d'eau sans avoir à retirer les éléments de l'appareil disposés au dessus dudit réservoir d'eau.

L'invention sera mieux comprise à l'étude d'un exemple de réalisation, pris à titre nullement limitatif, et de deux variantes, illustrés dans les figures annexées dans lesquelles :
- la figure 1 est une vue partielle d'un boîtier d'appareil électroménager selon l'invention,
- la figure 2 est une vue partielle extérieure du réservoir d'eau formant une partie du boîtier montré à la figure 1,
- la figure 3 est une vue partielle intérieure du réservoir d'eau montré à la figure 2,
- la figure 4 est une vue partielle de la partie inférieure du réservoir d'eau montré aux figures 2 et 3,
- la figure 5 est une vue partielle en coupe d'une première variante de réalisation,
- la figure 6 est une vue partielle en coupe d'une deuxième variante de réalisation.

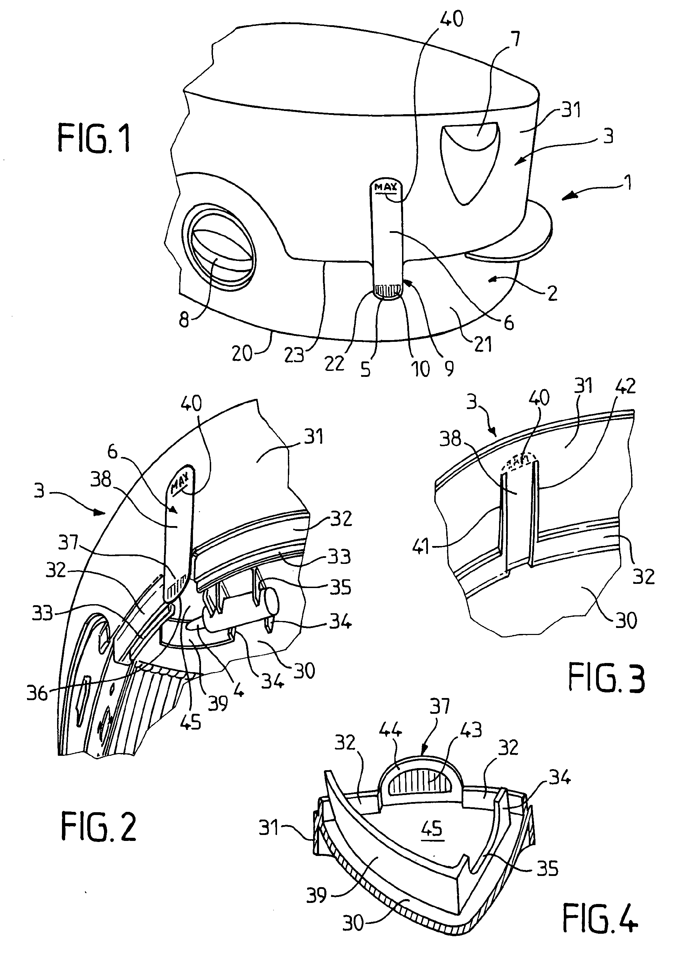

La figure 1 illustre un boîtier 1 selon l'invention comportant un socle 2 surmonté d'un réservoir d'eau 3. Le boîtier 1 appartient à un appareil électroménager tel qu'un cuiseur vapeur. Une enceinte de cuisson, non montrée aux figures, peut être disposée sur le boîtier 1. Le boîtier 1 comporte également un témoin de fonctionnement lumineux 5, un niveau d'eau 6, un dispositif de remplissage 7 et un minuteur 8 servant à la mise en marche de l'appareil.

Le socle 2 présente un fond 20 surmonté d'une paroi latérale 21 annulaire. Une échancrure 22 est ménagée dans le bord supérieur de la paroi latérale 21. Le socle 2 est avantageusement réalisé dans une matière plastique opaque bon marché, tel que le polypropylène. Le socle 2 est par exemple vissé sous le réservoir d'eau 3.

Le réservoir d'eau 3 présente un fond 30 visible à la figure 2. Le fond 30 est surmonté d'une paroi latérale 31 annulaire. Le dispositif de remplissage 7 est agencé sur la paroi latérale 31. La paroi latérale 31 présente un décrochement inférieur interne 32 prévue pour l'emboîtement du réservoir d'eau 3 dans la paroi latérale 21 du socle 2. Le décrochement inférieur interne 32 est prolongé par des nervures inférieures 33 agencées sous le fond 30. Le réservoir d'eau 3 est avantageusement réalisé dans une matière plastique translucide, tel que par exemple un polypropylène translucide, ou dans une matière plastique transparente, telle que par exemple le polycarbonate.

Le témoin de fonctionnement lumineux 5 comporte un voyant lumineux 4 monté dans le boîtier 1. Le voyant lumineux 4 est monté sous le fond 30 du réservoir 3. Plus particulièrement, le fond 30 présente deux nervures 34 comportant chacune une encoche 35 permettant de loger et de maintenir le voyant lumineux 4. Une brèche 36 est ménagée entre les nervures inférieures 33 pour permettre à la lumière issue du voyant lumineux 4 d'atteindre une languette 37 disposée en périphérie du fond 30 sous ledit fond. La languette 37 est disposée dans le prolongement de la paroi latérale 31. Un espace est ménagé entre la languette 37 et les nervures inférieures 33.

Plus particulièrement, la languette 37 est prolongée sur la face extérieure de la paroi latérale annulaire 31 par une facette 38 constituant le niveau d'eau 6. L'épaisseur de la paroi latérale 31 est légèrement plus faible au niveau de la facette 38. Une nervure 39 ménagée sous le fond 30 permet de réfléchir la lumière issue du voyant lumineux 4 vers le passage 36. Un marquage de niveau maximum 40 est placé dans la partie supérieure de la facette 38.

La face interne de la paroi latérale 31 est lisse, afin de limiter l'accrochage du tartre sur ladite paroi. La face externe de la paroi latérale 31 est dépolie à l'exception de la facette 38. La facette 38 présente une face externe et une face interne présentant un état de surface poli, pour faciliter la lecture du niveau de l'eau.

Tel que montré à la figure 3, deux nervures ascendantes 41, 42 sont ménagées sur la face interne de la paroi latérale 31. Les nervures ascendantes 41, 42 délimitent latéralement la facette 38. Les nervures ascendantes 41, 42 présentent une épaisseur décroissante de leur base à leur sommet jusqu'à rejoindre la paroi latérale 31. Les nervures ascendantes 41, 42 permettent également de faciliter le guidage de la lumière.

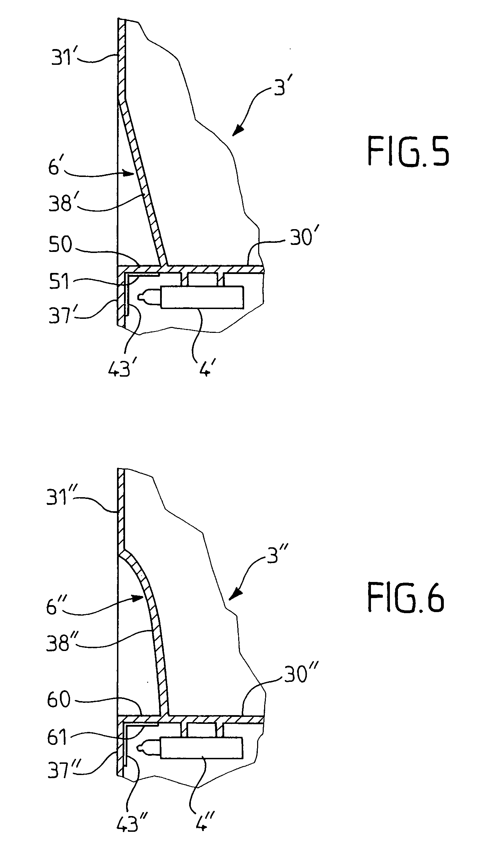

La figure 4 montre la face interne de la languette 37 pourvue de rainures 43 permettant d'obtenir une plus grande surface éclairée par le voyant lumineux 4 pour former de manière bien marquée le témoin de fonctionnement lumineux 5 (visible à la figure 1). Les rainures 43 sont entourées par une nervure périphérique 44.

La languette 37 est logée dans l'échancrure 22 formant un passage 9 dans le socle 2. La languette 37 forme une fenêtre 10 solidaire du réservoir d'eau 3, montée dans le passage 9 ménagé dans le socle 2. La languette 37 évite ainsi le montage d'une pièce supplémentaire sur le socle 2. La fenêtre 10 est transparente ou translucide, selon la nature de la matière choisie. De plus, la facette 38 prolongeant la languette 37 permet de réaliser un niveau d'eau 6 bénéficiant de l'éclairage du voyant lumineux 4. La partie 45 du fond 30 disposée entre la nervure 39 et la languette 37 est éclairée par le voyant lumineux 4, ce qui permet d'éclairer la surface de l'eau disposée dans le réservoir d'eau 3.

La figure 5 présente une variante de réalisation dans laquelle le réservoir d'eau 3' présente un niveau d'eau 6' formé par une facette 38' raccordée à la languette 37' par une paroi 50 transparente et/ou translucide disposée au dessus du voyant lumineux 4'. La paroi 50 peut également comporter des rainures 51 disposées par exemple sur sa face interne. La paroi 50 présente de préférence un état de surface poli. La paroi 50 constitue un prolongement du fond 30'. Le sommet de la facette 38' rejoint la paroi latérale 31'. Le voyant lumineux 4' éclaire la face extérieure de la facette 38'.

Plus particulièrement tel que montré à la figure 5, la facette 38' est plane et inclinée en dévers.

La figure 6 présente une autre variante de réalisation dans laquelle le réservoir d'eau 3" présente un niveau d'eau 6" formé par une facette 38" raccordée à la languette 37" par une paroi 60 transparente et/ou translucide disposée au dessus du voyant lumineux 4". La paroi 60 présente de préférence un état de surface poli. La paroi 60 peut également comporter des rainures 61 disposées par exemple sur sa face interne. La paroi 60 constitue un prolongement du fond 30". Le sommet de la facette 38" rejoint la paroi latérale 31". Le voyant lumineux 4" éclaire la face extérieure de la facette 38".

Plus particulièrement tel que montré à la figure 6, la facette 38" est incurvée et présente une face externe concave.

A titre de variante complémentaire pour les deux variantes précitées, la languette 37', 37" peut être remplacée par la paroi 50, 60. En d'autres termes, la languette 37', 37" ne se situe pas nécessairement dans le plan de la face latérale 31', 31 ".

A titre de variante complémentaire, le dispositif de remplissage 7 n'est pas nécessairement ménagé dans la paroi latérale 31 du réservoir d'eau 3, mais peut par exemple être ménagé dans un réceptacle récupérateur de jus disposé sur le réservoir d'eau 3.

A titre de variante complémentaire, le réservoir d'eau 3, 3', 3" n'est pas nécessairement entièrement réalisé en matière plastique transparente ou translucide. Notamment, grâce à l'injection bi-matière, la languette 37, 37', 37" et la facette 38, 38', 38" peuvent être réalisées en matière plastique transparente ou translucide, alors que le reste du réservoir est réalisé en une matière plastique opaque. Le fond 30, 30', 30" n'est pas nécessairement entièrement transparent ou translucide. Notamment, seule la partie 45 du fond 30, la paroi 50 ou la paroi 60 peuvent être au moins en partie transparente ou translucide.

A titre de variante complémentaire, les rainures 37, 37' 37", 51, 61 pourraient être ménagées sur une face externe.

La présente invention n'est nullement limitée à l'exemple de réalisation décrit et à ses variantes, mais englobe de nombreuses modifications dans le cadre des revendications.

## Revendications

1. Boîtier d'appareil électroménager comportant un réservoir d'eau (3 ; 3' ; 3") surmontant un socle (2) contenant un voyant lumineux (4 ; 4' ; 4"), une fenêtre (10) transparente ou translucide étant montée dans un passage (9) ménagé dans le socle, ladite fenêtre étant susceptible d'être éclairée par ledit voyant lumineux, **caractérisé en ce que** la fenêtre (10) est solidaire du réservoir d'eau (3 ; 3' ; 3").

2. Boîtier selon la revendication 1, **caractérisé en ce que** le réservoir d'eau (3 ; 3' ; 3") est réalisé dans une matière plastique transparente ou translucide.

3. Boîtier selon l'une des revendications 1 ou 2, **caractérisé en ce que** réservoir d'eau (3 ; 3' ; 3") présente un fond (30 ; 30' ; 30") sous lequel est monté le voyant lumineux (4 ; 4' ; 4").

4. Boîtier selon l'une des revendications 1 à 3, **caractérisé en ce que** la fenêtre (10) est formée par une languette (37 ; 37' ; 37") issue du réservoir d'eau (3 ; 3' ; 3"), ladite languette étant prolongée sur une paroi latérale (31 ; 31' ; 31") dudit réservoir d'eau par une facette (38 ; 38' ; 38") formant un niveau d'eau (6 ; 6' ; 6").

5. Boîtier selon la revendication 4, **caractérisé en ce que** la facette (38' ; 38") est raccordée à la languette (37' ; 37") par une paroi (50 ; 60) transparente et/ou translucide disposée au dessus du voyant lumineux (4' ; 4").

6. Boîtier l'une des revendications 4 ou 5, **caractérisé en ce que** la languette (37 ; 37' ; 37") comporte une face interne présentant des rainures (43 ; 43' ; 43").

7. Boîtier selon l'une des revendications 4 à 6, **caractérisé en ce que** la facette (38 ; 38' ; 38") présente une face externe et une face interne présentant un état de surface poli.

8. Boîtier selon l'une des revendications 4 à 7, **caractérisé en ce que** deux nervures ascendantes (41, 42) délimitent latéralement la facette (38) sur la face interne de la paroi latérale (31).

9. Boîtier selon la revendication 8, **caractérisé en ce que** les deux nervures ascendantes (41, 42) présentent une épaisseur décroissante de leur base à leur sommet jusqu'à rejoindre la paroi latérale (31).

10. Boîtier selon l'une des revendications 1 à 9, **caractérisé en ce que** le réservoir d'eau (3 ; 3' ; 3") comporte un dispositif de remplissage (7).
